(19) Europäisches Patentamt
European Patent Office
Office européen des brevets

(11) EP 2 409 464 B1

(12) EUROPEAN PATENT SPECIFICATION

(45) Date of publication and mention
of the grant of the patent:
**11.06.2014 Bulletin 2014/24**

(51) Int Cl.:
*H04L 27/26* *(2006.01)*     *H04L 5/00* *(2006.01)*
*G01S 5/02* *(2010.01)*     *G01S 5/10* *(2006.01)*
*H04W 64/00* *(2009.01)*

(21) Application number: **09843860.9**

(22) Date of filing: **27.04.2009**

(86) International application number:
**PCT/CN2009/071507**

(87) International publication number:
**WO 2010/124448 (04.11.2010 Gazette 2010/44)**

(54) **POSITIONING REFERENCE SIGNALS**

POSITIONSBESTIMMUNGS-REFERENZSIGNALE

SIGNAUX DE RÉFÉRENCE DE POSITIONNEMENT

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**25.01.2012 Bulletin 2012/04**

(73) Proprietor: **Huawei Technologies Co., Ltd.
Longgang District, Shenzhen
Guangdong 518129 (CN)**

(72) Inventors:
- **POPOVIC, Branislav
S-11366 Stockholm (SE)**
- **BERGGREN, Fredrik
Longgang District 518129
Shenzen (CN)**

(74) Representative: **Körber, Martin Hans
Mitscherlich PartmbB
Patent- und Rechtsanwälte
Postfach 33 06 09
80066 München (DE)**

(56) References cited:
CN-A- 1 130 966     CN-A- 101 305 522
US-A1- 2008 316 947

- **ERICSSON: "Reference Signals for Low
Interference Subframes in Downlink", R1-091314
3GPP TSG RAN WG1 MEETING 56BIS, SEOUL,
SOUTH KOREA, 23RD-27TH MARCH 2009, , no.
R1-091314 23 March 2009 (2009-03-23), pages 1-8,
XP002636007, Retrieved from the Internet: URL:
http://www.3gpp.org/ftp/tsg_ran/wg1_rl
1/TSGR1_56b/Docs/ [retrieved on 2011-05-09]**
- **HUAWEI: "Consideration on positioning support
for LTE Rel-9", 3GPP DRAFT; R1-091257
CONSIDERATION ON POSITIONING SUPPORT
FOR LTE REL-9, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, no. Seoul, Korea; 20090318,
18 March 2009 (2009-03-18), XP050338870,
[retrieved on 2009-03-18]**
- **MOTOROLA: "Study on hearability of reference
signals in LTE positioning support", 3GPP
DRAFT; R1-091336, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, no. Seoul, Korea; 20090318,
18 March 2009 (2009-03-18), XP050338934,
[retrieved on 2009-03-18]**

EP 2 409 464 B1

- MOTOROLA: "Results on accuracy of OTDOA-based positioning in LTE", 3GPP DRAFT; R1-091337, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090328, 28 March 2009 (2009-03-28), XP050338935, [retrieved on 2009-03-28]

## Description

### Field of the invention

The present invention relates to a method for generating a Positioning Reference Signal to be used in a wireless Orthogonal Frequency Division Multiplexing (OFDM) communication system, as defined in the preamble of claim 1.

The present invention also relates to a method of a receiving node for detecting a timing value in such a communication system as defined in the preamble of claim 12.

The present invention also relates to a method for transmitting the PRS, to a computer program and to a computer program product implementing the methods of the invention.

The present invention also relates to an entity arranged for generating a PRS to be used in such a communication system, as defined in the preamble of claim 18, and to a transmitting node, as defined in the preamble of claim 19.

The present invention also relates to a receiving node arranged for detecting a timing value to be used for determining its position in such a communication system, as defined in the preamble of claim 20.

### Related art and background of the invention

A requirement in many wireless communication systems, for instance cellular systems utilizing Orthogonal Frequency Division Multiplexing (OFDM), such as the Long Term Evolution (LTE) system, is that the system is capable of accurately determining the location of a receiving node, such as a mobile station or a user equipment (UE). Usually the location of the receiving node is determined by the serving cell, on the basis of measurements being performed at the receiving node. Alternatively, the receiving node can based on the measurement results determine its location itself.

The measurements at the receiving node reflect the distance of the receiving node from at least two neighboring cells, whose coordinates are known by the serving cell. Typically, the number of neighboring cells used is between 3 and 5.

The usual measure used for determining the receiving cell position is a Time Difference of Arrival (TDOA) between a positioning reference signal (PRS) being transmitted from the serving cell and PRSs being transmitted by other cells, i.e. the neighboring cells, being selected for distance measurements. The signals from different cells will arrive at the receiving node at different times due to the different distances between the receiving node and the cells, respectively, which is used for determining the receiving node location.

The measured TDOA $\Delta t_{2,1}$ is usually fed back to the serving sell, which use this information to calculate the distance difference between the receiving node and the $cell_1$, and between the receiving node and $cell_2$ as:

$$\Delta d_{2,1} = c \cdot \Delta t_{2,1} = d_2 - d_1 , \qquad\qquad (eq.\ 1)$$

where

c is the velocity of light,

$$d_i = \sqrt{(x_i - x)^2 + (y_i - y)^2} ,$$

*(x, y)* is the unknown position of the receiving node, and
$(x_i, y_i)$ is the position of the i th cell.

If K cells are detected by the receiving node, the equation 1 defines (K-1) non-linear equations, whose solution gives the unknown position of the receiving node *(x, y)*.

The Time Of Arrival (TOA) of PRSs can be detected by utilizing the cross-correlation between the received signal and all the PRSs that have been indicated to the receiving node by the serving cell. The PRSs with whom the receiving node correlates the received signal should unambiguously, one-to-one, correspond to the cell IDs of the cells in the set of cells being used for the measurement.

Normally, it can be assumed that the receiving node receives information about the set of PRSs it should measure, i.e. the set of cells from which the receiving node receives a signal, as well as the relative transmit timing of these signals.

The PRSs are assumed to be transmitted in specially allocated subframes, containing either 12 or 14 OFDM symbols. These special subframes should experience low interference and could be based either on regular subframes without Physical Downlink Shared Channel (PDSCH) transmission, or on Multicast Broadcast Single Frequency Network (MBSFN) subframes.

In regular OFDM subframes, the reference signals from LTE must remain, while that is not necessary if MBSFN subframes are used, since LTE Release 8 User Equipments (UEs) will not be scheduled in such subframes. The control region, typically the first 2 OFDM symbols in the OFDM subframe, cannot be used for the PRS. If regular OFDM subframes are used, it may also be desirable to only transmit the PRS in the OFDM symbols that do not contain the LTE cell-specific Common Reference Signals (CRSs).

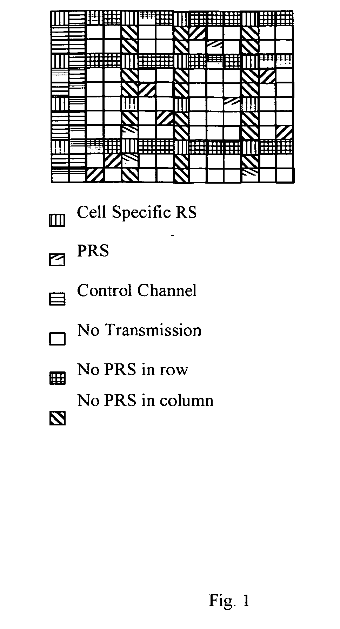

Figure 1 shows a regular prior art OFDM subframe, in which there are 9 available OFDM symbols for PRS.

An important requirement for a large set of PRSs, e.g. a set of PRSs corresponding one-to-one to the cell IDs of the system, i.e. a set containing 504 PRSs for LTE, is that the aperiodic cross-correlation between any two PRSs is as small as possible, while the aperiodic auto-correlation of each PRS should have as much as possible impulse-like shape, i.e. as low as possible sidelobes.

An impulse-like shaped auto-correlation allows accurate Time Difference Of Arrival (TDOA) estimation in case of multipath propagation, i.e. it minimizes the probability of finding a false TDOA due to high sidelobes of the auto-correlation. The cross-correlation properties determine the level of interference resulting from neighboring cells when the PRS subframes from different cells are partially or fully aligned. Low cross-correlation between PRSs allows better usage of the time-frequency resources, as more cells can transmit simultaneously. Thus, fewer PRS subframes are needed when the cross-correlation is low.

Generally, the existing CRSs being used for channel estimation in a communication system utilizing OFDM, e.g. the LTE cellular system, are contained in certain OFDM symbols within a subframe of 12 or 14 OFDM symbols, with every sixth Resource Element (RE) used for transmission of energy. The RE corresponds to a sinusoid (also called a subcarrier), whose frequency is a multiple integer of the inverse of the duration of the OFDM symbol, and whose duration is equal to the duration of an OFDM symbol. Different cell-specific Reference Signals (RSs) have different frequency offsets of occupied REs, having values in the range between 0 and 5 REs, depending on the cell ID. The used CRS REs are modulated by the elements of a cell-specific QPSK pseudo-random sequence. For positioning purposes, the LTE CRSs may not provide sufficient signal-to-interference plus noise ratio.

Further, since the number of time-frequency resources for PRSs is limited in the communication system, it is difficult to generate a large number of time-frequency patterns which exhibit good cross-correlation properties, as eventually there will become a large number of "hits" between different patterns, i.e., usage of the same REs.

Also, it is important that the peak-to-average power ratio of the PRS should be as low as possible, in order to maximize the received energy from each cell involved in Observed Time Difference Of Arrival (OTDOA) measurement. If there is no data transmission in the subframes used for PRS, it might lead to that all the subcarriers in a PRS become co-phased at some instants. This undesirable effect is particularly present if all the REs of the PRS are modulated with a same value (e.g., unity).

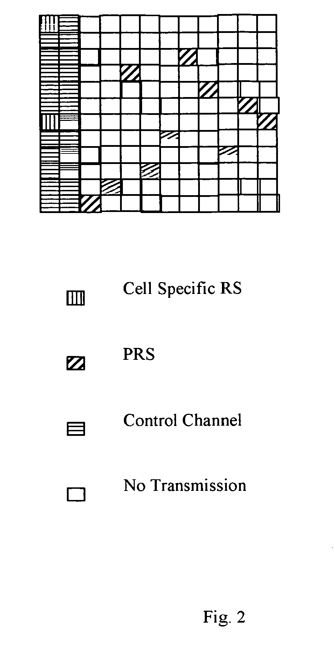

Figure 2 shows a prior art solution, in which a time-frequency pattern for PRSs based on a Costas Arrays of length 10 has been proposed to be used in a PRS subframe. The exact Costas Array pattern to be used will here depend on design choices for the PRS subframe. For example, the pattern used will depend on the choice between normal and extended cyclic prefix subframes, wherein the latter contains less OFDM symbols, or if MBSFN subframes are to be used. In Figure 2, a candidate Costas Array of length 10 proposed in for use in extended cyclic prefix MBSFN subframes is shown.

The array in Figure 2 can be mapped into resource blocks having a bandwidth corresponding to 12 subcarriers. To fill out the system bandwidth, this 12x10 block could be replicated in frequency, leaving 2 subcarriers empty per resource block Alternatively, the 10x10 array may be replicated across all resource blocks without coordination with resource block boundaries. In this case, there are no empty subcarriers.

Different cells would have different versions of a generic array shown in Figure 2, wherein these versions are obtained by cyclically shifting the 10x10 pattern in time and frequency. The shifts are performed modulo 10 rows and modulo 10 columns. The pattern shown in Figure 2 has the property that all cyclic time/frequency shifts of the sequence overlap in at most two symbols with a majority of the sequences overlapping in less than two symbols.

In addition, if only time shifts or frequency shifts are used, there is no overlap between patterns. Also, some pairs of patterns that are both time and frequency shifted are orthogonal. Thus, there are a total of 10x10=100 possible time/frequency shifts of the array in Figure 2, leading to a total of 100 distinct time-frequency patterns that overlap with each other in at most two symbols.

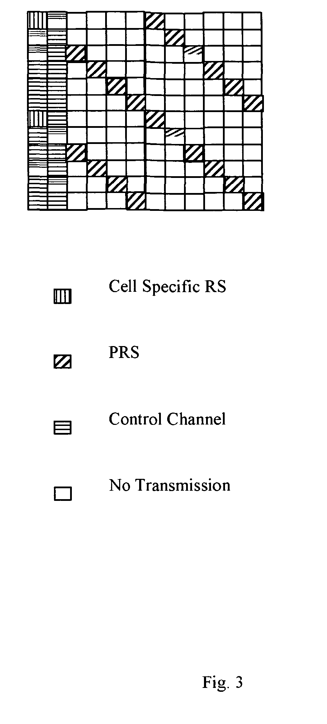

In Figure 3, another prior art solution of a denser time-frequency pattern is shown. In this prior art solution, different PRSs are obtained by cyclically shifting the given pattern in the frequency domain. Hence, only 6 unique PRSs can be generated. The time-frequency pattern is repeated over the whole system bandwidth.

The above described prior art solutions have a number of drawbacks, of which one is that the number of PRSs possible to generate is significantly less than the number of cell IDs in a normal communication system. If the number of PRSs is smaller than the number of cell IDs in the system, additional system planning may be needed to assure that sufficiently many unique candidate sets of PRSs can be formed in the network.

Further, these prior art solutions have high Peak to Power Average Ratios (PAPRs) for the PRSs. For the two described prior art time-frequency patterns, the PAPRs of the PRSs in a 20 MHz bandwidth are 20.9 and 23.2 dBs, respectively, which are problematic levels requiring large backoff in the power amplifiers used for transmitting the PRSs.

**Aim and most important features of the invention**

It is an object of the present invention to provide a generation and use of PRSs that solve the above stated problems.

The object is achieved by the above mentioned method for generating a PRS according to the characterizing portion of claim 1, i.e. a method performing the steps of:

determining a time-frequency pattern of REs to be used for transmitting the PRS, wherein the time-frequency pattern includes at least two OFDM symbols, and

assigning, for each one of the at least two OFDM symbols, respectively, a value to each one of a number of the REs being within that OFDM symbol, wherein

the values being assigned to the number of REs correspond to elements in a modulation sequence having a length being equal to the number of REs, and are to be used for modulating OFDM subcarriers corresponding to the REs within that OFDM symbol.

The object is also achieved by the above mentioned method according to the characterizing portion of claim 18, i.e. by the receiving node performing the steps of, while utilizing knowledge of a cell ID of each one of at least three cells:

determining a time-frequency pattern of REs having been used for transmitting a received signal,

determining at least one modulation sequence having been used for modulating the OFDM subcarriers corresponding to REs of the time-frequency pattern, wherein the at least one modulation sequence has a length being equal to a number of the REs being within an OFDM symbol being part of the time-frequency pattern, and

determining, based on the determined time-frequency pattern and the determined at least one modulation sequence, the timing value for the received signal in relation to signals from the other ones of the at least three cells.

The object is also achieved by the above mentioned entity according to the characterizing portion of claim 24, i.e. the entity comprising

determination means arranged for determining a time-frequency pattern of REs to be used for transmitting the PRS, wherein the time-frequency pattern includes at least two OFDM symbols,

assigning means arranged for assigning, for each one of the at least two OFDM symbols, respectively, a value to each one of a number of the REs being within that OFDM symbol, wherein

the values being assigned to the number of REs correspond to elements in a modulation sequence having a length being equal to the number of REs, and are to be used for modulating OFDM subcarriers corresponding to the REs within that OFDM symbol.

The object is also achieved by the above mentioned transmitting node according to the characterizing portion of claim 25, i.e. the transmitting node transmitting the PRS having been generated in an entity comprising:

determination means arranged for determining a time-frequency pattern of Resource Elements (REs) to be used for transmitting the PRS, wherein the time-frequency pattern includes at least two OFDM symbols,

assigning means arranged for assigning, for each one of the at least two OFDM symbols, respectively, a value to each one of a number of the REs being within that OFDM symbol, wherein

the values being assigned to the number of REs correspond to elements in a modulation sequence having a length being equal to the number of REs, and are to be used for modulating OFDM subcarriers corresponding to the REs within that OFDM symbol.

Thus, the entity arranged for generating the PRS can be located either within or outside the transmitting node itself. That is, the PRS can be generated in a separate entity and be stored in the transmission node, or it can be both generated and transmitted by the transmit node.

The object is also achieved by the above mentioned receiving node according to the characterizing portion of claim 26, i.e. the receiving node comprising:

determining means arranged for determining, while utilizing knowledge of a cell ID of each one of at least three cells, a time-frequency pattern of Resource Elements (REs) having been used for transmitting a received signal,

determination means arranged for determining, while utilizing the knowledge, at least one modulation sequence having been used for modulating the OFDM subcarriers corresponding to the REs of the time-frequency pattern, wherein the at least one modulation sequence has a length being equal to a number of the REs being within an OFDM symbol being part of the time-frequency pattern,

determination means arranged for determining, while utilizing the knowledge, based on the determined time-frequency pattern and the determined at least one modulation sequence, the timing value for the received signal in relation to signals from the other ones of the at least three cells.

The object is also achieved by the above mentioned method for transmitting the PRS, the computer program, and the computer program product implementing the methods of the invention.

The generation of the PRS, the method for transmitting the PRS, the method for detecting a timing value, the entity being arranged for generating the PRS, the transmitting node arranged for transmitting the PRS, and the receiving node arranged for detecting the timing value according to the present invention are characterized in that they define the PRS by a time-frequency pattern of REs over multiple OFDM symbols and modulation sequences being used for modulating the REs being within the time-frequency pattern. One such modulation sequence has a number of elements, L, which number of elements L is is equal to the number of REs occupied by the PRS in one OFDM symbol. This has the advantage that the favorable properties of the chosen modulation sequence, e.g. the PAPR and/or auto-correlation and/or cross-correlation properties, of the chosen modulation sequence, are preserved in the PRSs being generated.

Thus, the modulation sequences used for generating PRSs can be chosen such that they at least control the peak-to-average power ratio, provide good auto-correlation properties, and provide good cross-correlation properties. These characteristics of the modulation sequences are, according to the invention, preserved in the generated PRS.

Because of this, the number of PRSs can be increased to be the same number as the number of cell IDs, while not sacrificing the performance, which is very advantageous, since the most efficient way to avoid network planning is to make the number of PRSs equal to the number of cell IDs. It is generally most straightforward regarding system complexity to have PRS which are unique and relate to the cell ID by a one-to-one mapping.

Thus, the invention can be used for increasing the number of PRSs to be the same as the number of cell IDs, while not sacrificing the performance. For instance, in LTE system (3GPP UTRA Rel.8), the number of cell IDs is 504. By utilizing the present invention, 504 PRSs can easily be achieved.

According to one embodiment of the invention, different modulation sequences are used in different PRSs to generate multiple PRSs from the same time-frequency pattern, in addition to controlling the peak-to-average power ratio.

According to different embodiments of the invention, the modulation sequences are the same and different, respectively, in the different OFDM symbols within a PRS.

According to one embodiment of the invention, the same modulation sequence is used in all OFDM symbols of the PRS.

According to different embodiments of the invention, different PRSs have and have not, respectively, different modulation sequences.

According to a different embodiment of the invention, the different modulation sequences are generated from one, or multiple, respectively, base modulation sequences through additional manipulation of the sequence elements.

According to an embodiment of the invention, different cyclic shifts of one, or multiple, sequences are used in the different OFDM symbols within the PRS.

According to an embodiment of the invention, cyclic shifts of two base modulation sequences of length L/2 are used in one OFDM symbol within the PRS.

According to an embodiment of the invention, the two sequences of length L/2 are different and the two sequence shifts can be different.

According to different embodiments of the invention, different phase modulation of one base modulation sequence and multiple base modulation sequences, respectively, are used in the different OFDM symbols within the PRS.

According to an embodiment of the invention, the cyclic shifts and/or phase modulations can be determined implicitly by the receiving node based on, for example, cell identities and/or OFDM symbol numbers.

According to an embodiment of the invention, the cyclic shifts and/or phase modulations in different OFDM symbols can be determined from the same integer sequence defining the time-frequency positions of REs in the PRS.

According to an embodiment of the invention, the modulating sequences can be obtained from (one or several of) Zadoff-Chu sequences, QPSK sequences, Golay complementary sequences, and m-sequences.

Detailed exemplary embodiments and advantages of the generation and use of a PRS according to the invention will now be described with reference to the appended drawings illustrating some preferred embodiments.

**Brief description of the drawings**

Fig. 1 shows a prior art subframe.

Fig. 2 shows a prior art PRS subframe.

Fig. 3 shows a prior art PRS subframe.

Fig. 4 shows mapping of REs to subcarriers.

Fig. 5 shows mapping of REs to Fourier coefficients of an N-point DFT.

Fig. 6 shows an example of mapping according to an embodiment of the invention.

Fig. 7 shows an example of mapping according to an embodiment of the invention.

Figs. 8 and 9 show flow chart diagrams of the invention.

Figs. 10 and 11 show simulations of an embodiment of the invention.

**Detailed description of preferred embodiments**

The invention can e.g. be used in a multi-user OFDM-based transmission system for highspeed downlink shared channel in cellular systems, as well as other multi-carrier systems.

In some wireless communication systems, such as LTE, a reference signal defines a so called antenna port in a cell. Multiple orthogonal antenna ports can be used in a cell and they are transmitted on multiple physical transmit antennas.

In the following discussion, we consider one (1) antenna port to be used for positioning purposes. However, the invention is not limited to this and could be extended by a skilled person to multiple antenna ports for positioning.

According to the invention, when generating a PRS, a time-frequency pattern of REs to be used for transmitting the PRS is determined. The time-frequency pattern normally occupies a number of OFDM symbols. Within each one of these OFDM symbols, the REs of the time-frequency pattern being within that OFDM symbol are assigned a value, which corresponds to an element in a modulation sequence. The modulation sequence has, according to the invention, the same length, i.e. has the same number of elements as the number of REs belonging to the time-frequency pattern within that OFDM symbol. These values being assigned to the REs used for PRS in that OFDM symbol are then to be used for modulating OFDM subcarriers corresponding to those REs.

Thus, according to the invention, when generating a PRS, a modulation sequence is applied to the REs used for the PRS. The same or different modulation sequences can be used in different PRSs, in addition to the same or different time-frequency patterns, to generate PRSs with low PAPRs and good auto-correlation and cross-correlation properties. In the following we describe more in detail how to generate modulation sequences and how to apply them to the OFDM symbols used for the PRS.

The problems being related to the peak-to-average power ratio (PAPR) of OFDM signals are well known for a skilled person. A large ratio implies that the power amplifier transmitting the signal has to be backed off to prevent non-linear distortion of the transmitted signal. This will lead to lower output transmit power being available, which results in reduced signal coverage. For positioning purposes this means that the hearability, i.e. the number of cells a receiving node, e.g. a UE, can detect, will be reduced. It will also limit the ability for the transmitter to use power boosting on the PRSs.

If the PRSs are left unmodulated, the result might become an undesirable co-phasing of the subcarriers at some instants, which creates unfavorable large signal power dynamics. Therefore, according to the invention, the PRS should include a modulation being performed by the use of a modulation sequence, wherein the modulation is aimed at minimizing the peak-to-average power ratio.

There exists various types of sequences that have good signal dynamics properties, when being used as such a modulation sequence. For instance, in LTE, Zadoff-Chu sequences are widely utilized. Such a sequence can be defined as:

$$Z_u[k] = e^{-i\pi uk(k+1)/M}, \quad k = 0,1,\dots,M-1 \qquad \text{(eq. 2)}$$

where the index *u* should be relatively prime to the length of the sequence M. From equation 2, multiple sequences can be generated by using different indices *u*, which is referred to as different root sequences.

A sequence according to equation 2, which is defined in the frequency domain, has a unit magnitude and hence 0 dB peak-to-average power ratio. However, for OFDM, the sequence should modulate a set of subcarriers and PAPR should be studied in the time-domain. When excluding the DC subcarrier and being mapped to a set of non-consecutive subcarriers, the Discrete Fourier Transform (DFT) of the sequence does generally not become a Zadoff-Chu sequence. However, the resulting signal still typically exhibits good signal dynamics. Therefore, according to an embodiment of the invention, the PAPR is reduced by assigning/mapping Zadoff-Chu sequences to the set of REs used for transmitting the PRS.

Zadoff-Chu sequences have favorable correlation properties. Also, Zadoff-Chu sequences can be manipulated, e.g. by being phase modulated, such that an orthogonal set of sequences is generated, where the resulting signals have low PAPR. This is utilized in an embodiment of the invention. The constant magnitude of these sequences is also beneficial for channel estimation purposes.

According to other embodiments of the invention, also other types of sequences, which are known to have good peak-to-average power properties, are used as modulation sequences. According to different embodiments, Golay complementary sequences, m-sequences, and QPSK sequences, respectively, are used for the modulation.

The modulation sequences used are defined in the frequency domain and are used to modulate the subcarriers that are utilized for PRS transmission. According to the invention, if the number of REs used for PRS transmission within an OFDM symbol is L, the modulation sequence length should also be L. This has the effect that the favorable properties of the chosen modulation sequence, e.g. the PAPR properties of a Zadoff-Chu sequence, are preserved in the PRSs generated. Thus, by, in accordance with the invention, not spreading the modulation sequence over more than one OFDM symbol, the generated PRSs will also get the advantageous properties of the modulation sequences chosen.

According to an embodiment of the invention, to achieve that the number of REs used for PRS transmission within an OFDM symbol equals the length of the modulation sequence, the length of the modulation sequence should be adapted to that number of REs.

For example, for the case of Zadoff-Chu modulation sequences, this could be achieved by selecting the sequence length *M* in equation 2 such that it equals the number of REs used for PRS transmission within the OFDM symbol *L*, i.e. *M=L*.

Also, the sequence length *M* in equation 2 can be selected to be smaller than the number of REs used for PRS transmission within the OFDM symbol *L*, i.e. *M<L,* and then the modulation sequence can be (cyclically) extended from *M* to *L* elements.

Also, the sequence length *M* in equation 2 can be selected to be larger than the number of REs used for PRS transmission within the OFDM symbol *L*, i.e. *M>L,* and then the modulation sequence can be shortened from *M* to *L* elements.

As is clear to a skilled person, corresponding length adapting principles can also be applied to any other type of modulation sequence of length *M*.

Further, for generating the PRSs, multiple modulation sequences may be required. According to an embodiment of the invention, this is achieved by starting from a base modulation sequence, and then this base modulation sequence is altered by a specific manipulation, whereby a modulation sequence to be used for modulation the PRS results from the manipulation. Thus, from each one of at least one base modulation sequences of length *L*, a number of different modulation sequences can be generated, as will be described below.

According to an embodiment of the invention, the manipulation of the base modulation sequence involves making cyclic shifts of the base modulation sequence, so that each shift generates one unique modulation sequence. That is, for example, for a base modulation sequence *Z[k]* where *k* = 0,1, ..., *L* - 1, a cyclic shift of m steps is applied to generate a new modulation sequence according to

$$\widetilde{Z}[k] = Z[\mathrm{mod}(k-m,L)], \ k = 0,1,\ldots,L-1. \qquad \text{(eq. 3)}$$

Due to the property of an *N*-point DFT, a cyclic shift of *m* subcarriers in the frequency domain results in a linear phase modulation in the time domain according to

$$X[\mathrm{mod}(k-m,N)] \leftrightarrow e^{i2\pi mn/N} x[n], \qquad \text{(eq. 4)}$$

where *X[k]* is the modulation symbol of frequency *k* = 0,1,..., *N* - 1 and *x[n]* is the signal sample at a time instant *n* = *0,1, ..., N* - 1. The cyclic shift of the base modulation sequence in the frequency domain can therefore be equivalently implemented by a phase modulation (phase shift) of the base modulation sequence in the time-domain. The phase shift in the right hand side of equation 4 is denoted linear since the exponent is a linear function of n.

The phase shift (phase modulation) in equation 4 will not alter the peak power of the signal or the average signal power. Hence, if the cyclic shift is performed over all the *N* subcarriers of the DFT as equation 4 defines, then the peak-to-average power ratio does not change by this manipulation. Therefore, the advantageous PAPR properties of the base modulation sequence is preserved in the modulation sequence, which will be used for modulating the PRS.

Further, the PRS is transmitted on a set of REs, which are represented by time-frequency indices respectively and each RE should be mapped to the Radio Frequency (RF) domain and be transmitted on a subcarrier. One RE corresponds to one OFDM subcarrier during one OFDM symbol interval. For example in the LTE standard [Sec. 6.12, 5], the OFDM baseband signal is symmetrically mapped around an unmodulated DC subcarrier.

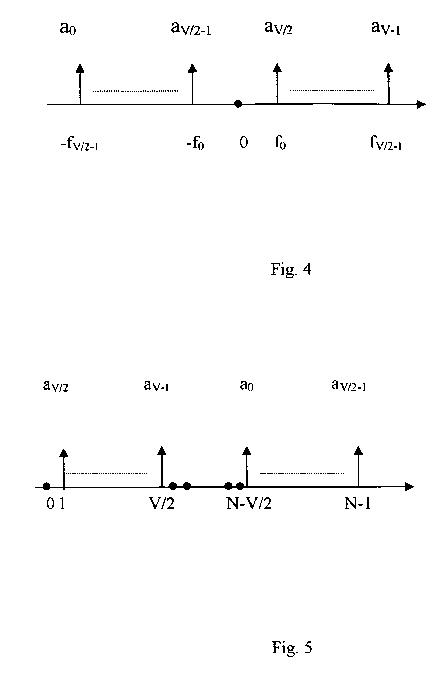

Fig. 4 illustrates the used principle for mapping a set of resource elements values {$a_0$, $a_1$,..., $a_{V-1}$} (V even) to the subcarrier frequencies in an OFDM symbol. The baseband generation of an OFDM signal is typically done by a DFT.

Fig. 5 shows the relation to the discrete domain assuming an N-point DFT is used, wherein the dots denote unmodulated frequencies. If a modulation sequence is mapped to the discrete frequencies according to Fig. 5, due to the unmodulated frequencies in the middle, the modulation sequence cannot be cyclically shifted modulo-N and the property of equation 4 cannot always be maintained. That is, the time-domain signal is not modulated by a linear phase term and the peak-to-average power may change.

However, according to an embodiment of the invention, the manipulation of the at least one base modulation sequence includes performing a first and a second cyclic shift on a first and a second base modulation sequence of the same length, followed by a concatenation of these base manipulated modulation sequences.

According to an embodiment, the first and second cyclic shifts are different from each other.

Thus, by utilizing two base modulation sequences of length *L*/2 and performing the cyclic shifts on these two sequences separately, a signal with low PAPR can be generated.

According to an embodiment, the first and second base modulation sequences are obtained from different root modulation sequences, where a root sequence is a unique sequence not being a result of manipulation of another sequence. For example, two root sequences can be obtained from equation 2 from different indices u.

Hence, according to an embodiment of the invention, cyclic shifts are made of two base modulation sequences $Z_u[k]$ and $Z_v[k]$ (*u* and *v* may be different, for which they become different root sequences), each being of length *L*/2, so that each shift generates one unique sequence according to:

$$\widetilde{Z}[k] = \begin{cases} Z_u[\mathrm{mod}(k-m_u, L/2)], & k = 0,1,\ldots,L/2-1 \\ Z_v[\mathrm{mod}(k-m_v, L/2)], & k = L/2,\ldots,L-1 \end{cases}. \qquad \text{(eq. 5)}$$

This modulation sequence should be mapped in an N-point DFT, such that the first (or last) *L/2* elements of equation 5 are mapped to frequencies *1,...,L/2* or *N-L/2, ...,N-1*.

According to an embodiment of the invention, different cyclic shifts of one base modulation sequence is used in the different OFDM symbols utilized for the PRS transmission.

According to another embodiment, different PRSs utilize different sets of cyclic shifts.

Further, according to an embodiment of the invention, different phase modulations (phase shifts) are performed on the base modulation sequence or sequences, such that each phase modulation generates one unique modulation sequence. Due to the property of the *N*-point DFT, a linear phase shift in frequency domain results in a cyclic shift in the time domain according to:

$$x\left[\mathrm{mod}(n - m, N)\right] \leftrightarrow e^{-i2\pi mk/N} X\left[k\right], \qquad \text{(eq. 6)}$$

where *X[k]* is the modulation symbol of frequency *k* = 0,1,..., *N* - 1 and *x[n]* is the signal sample at time instant *n* = 0,1,..., *N* - 1.

This embodiment can therefore also be equivalently implemented by a cyclic shift in the time-domain.

According to other embodiment of the invention, these phase modulations of the base modulation sequence do not use the linear phase modulation shown in equation 6, but uses instead generally any general phase modulation method, linear and non-linear.

The cyclic shift in the time domain in equation 6 will not alter the peak (or average signal) power. Hence, if the phase modulation is performed over all the *N* subcarriers of the DFT as equation 6 defines, the peak-to-average power ratio does not change by this manipulation, which of course is advantageous.

According to an embodiment of the invention, different phase modulations are used in the different OFDM symbols used for the PRS transmission. According to another embodiment, different PRSs utilize different sets of phase modulations.

Further, according to an embodiment of the invention, the manipulation of the base modulation sequence is first performed, and then the values of the modulation sequence are assigned only to REs being part of the time-frequency pattern. Thus, this embodiment is similar to the phase modulation embodiment previously described, but only applies the phase modulation on the subcarriers that are used for transmitting the PRS.

That is, for a sequence *Z[k]* where *k* = 0,1,..., *L* - 1 and *L<N,* a phase shift is applied according to:

$$\widetilde{Z}\left[k\right] = e^{-i2\pi pk/L} Z\left[k\right], \; k = 0,1,\ldots,L-1. \qquad \text{(eq. 7)}$$

Due to the fact that the phase term cycles through one period, the sequence *Z̃[k]* in equation 7 is orthogonal to the sequence *Z[k],* if *Z[k]* has constant magnitude. Such orthogonality is beneficial if the TDOA determining method is implemented in the frequency domain.

Further, according to an embodiment of the invention, the manipulation, i.e. the cyclic shift or the phase modulation is performed based on any one of a radio frame number, a PRS subframe number, an OFDM symbol number, a position of at least one RE in said time-frequency pattern, or a cell ID. By letting the manipulation depend on any one of these parameters, a receiving node, such as a UE, is able to detect the modulation sequence used without the need for signaling, since the receiving node already has knowledge of these parameters.

Further, according to an embodiment of the invention, any general phase modulation method, i.e. not only the linear phase modulation shown in equation 7 can be used for performing this manipulation.

As is clear to a skilled person, also other manipulations than cyclic shifts and phase modulations of one, or several, base modulation sequences described above, can also be performed, as long as they preserve the PAPR and correlation features of the base modulation sequences.

Further, as has been stated above, the modulation sequence should modulate the REs in an OFDM symbol of a PRS subframe, where the REs are used for transmission of the PRS. The REs are typically represented by integer indices. According to an embodiment of the invention, the sequence can be mapped to these REs by mapping the modulation sequence in increasing order of the REs. According to another embodiment, the modulation sequence is mapped in decreasing order of the REs. According to yet another embodiment, modulation sequences are mapped in any other pre-determined order.

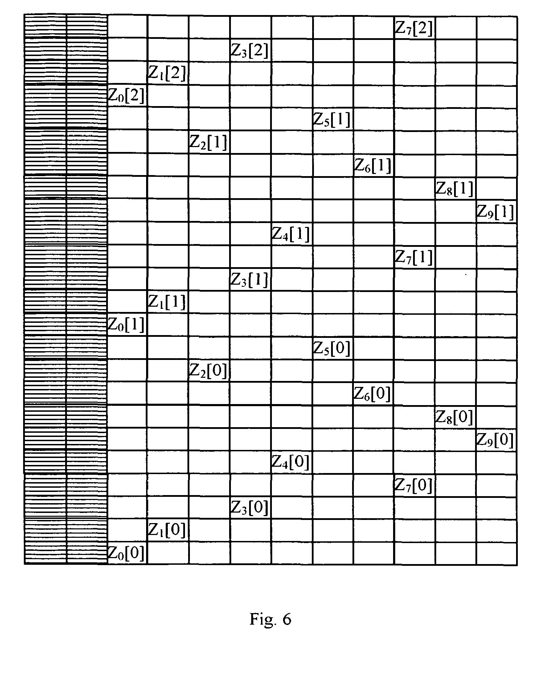

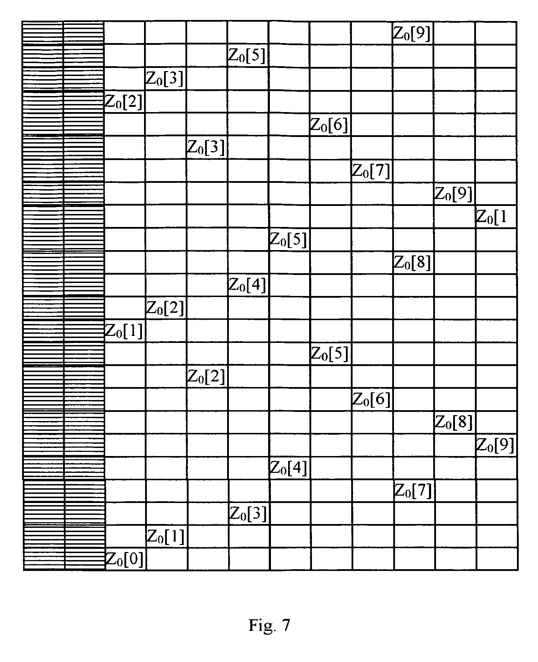

Figures 6 and 7 illustrate mapping of the modulation sequences to the REs of the PRS in an increasing order of the REs (lowest sequence index k to lowest RE).

Figure 6 illustrates a mapping according to an embodiment of the invention, in which different root modulation sequences $Z_u[k]$ are mapped to the REs of a time-frequency pattern of a PRS. That is, different modulation sequences are used for different OFDM symbols.

Figure 7 illustrates a mapping according to an embodiment of the invention, in which one modulation sequence is mapped to all of the REs used for PRS, i.e. one modulation sequence is used for more than one OFDM symbol. Here, the base modulation sequence is cyclically shifted one step in every OFDM symbol.

Further, a number of alternatives exist for allocating the modulation sequences for transmission on to the REs in the PRS subframe.

According to an embodiment of the invention, in a PRS subframe, a set of different modulation sequences is used in the different OFDM symbols. Such sets of multiple sequences can be obtained from different unique base modulation sequences, e.g. by using Zadoff-Chu sequences with different indices *u*.

According to an embodiment of the invention, the manipulations, i.e. the cyclic shifts and/or the phase modulations of a single base modulation sequence are used to create the set of unique modulation sequences to be used in the different OFDM symbols and/or for the different PRSs. These manipulations are judiciously selected to reduce peak-to-average power ratios and improve correlation properties.

Also, according to an embodiment, different manipulations, i.e. the cyclic shifts and/or phase modulations, are used for the different PRSs, to generate multiple unique PRSs from a same time-frequency pattern.

Further, according to an embodiment, all PRSs use the same modulation sequences, which may or may not be the same in the different OFDM symbols within the PRS. This is the typical case where the main purpose of the modulation sequences is to achieve peak-to-average power reduction, but not to generate multiple PRSs from the same time-frequency pattern.

According to an embodiment of the invention, the PRSs are transmitted in Resource Blocks (RBs), which belong to a subset of all the RBs in a subframe. Thus, the PRSs are not transmitted on all available RBs in the subframe. A RB is defined as the REs of time-frequency resources within 180 kHz x 0.5 ms.

Further, a receiving node according to the invention performs detection of a timing value to be used for determining its position. Generally, the receiving node, e.g. a UE, is aware of the cell IDs of a number of surrounding cells. The receiving node can then utilize its knowledge of at least three cells, for determining a time-frequency pattern of REs having been used for transmitting a received signal. Also, the receiving node is able to determine at least one modulation sequence having been used for modulating the OFDM subcarriers corresponding to REs of the time-frequency pattern. The at least one modulation sequence here has a length being equal to a number of the REs being within an OFDM symbol being part of the time-frequency pattern of the PRS. Based on the determined time-frequency pattern and the determined at least one modulation sequence, the receiving node can determine the timing value for the received signal in relation to signals from the other ones of the at least three cells.

Since the PRSs being generated according to the invention have such great PAPR and correlation characteristics, the receiving node is able to determine the timing value more efficiently and accurately than in prior art systems. Also, system complexity being necessary for determining the timing value is minimized, since the number of PRSs can be made equal to the number of cell IDs in the system.

According to an embodiment of the invention, the receiving node provides one or more determined values corresponding to a Time Difference of Arrival (TDOA) to its serving base station. The TDOA values are here determined based on the determined timing value.

According to another embodiment of the invention, the receiving node itself utilizes the determined timing value for determining its position.

Since, according to an embodiment of the invention, the manipulation of the base modulation sequence is performed based on any one of a radio frame number, a PRS subframe number, an OFDM symbol number, a position of at least one RE in said time-frequency pattern, or a cell ID, the receiving node can utilize this when determining at least one of the time-frequency pattern and the at least one modulation sequences. That is, the receiving node uses its knowledge of at least one of these parameters, and the known relationship between these parameters and the time-frequency patterns and/or the modulation sequences and/or the manipulations having been used in the transmitting node.

This has the advantage that the receiving node, e.g. a UE, is able to determine the PRS, i.e., both time-frequency pattern and modulation sequence (including any phase- or cyclic shifts) without any additional control signaling.

Thus, according to the invention, the features characterizing the PRS are possible to be determined with the knowledge of the cell ID and possibly by additional other quantities known to the receiving node, such as a radio frame number, a PRS subframe number, an OFDM symbol number within a PRS subframe etc.

For example, cyclic shifts and phase modulations can be determined from the same integer sequence defining the time-frequency positions of REs in the PRS.

The following example illustrates an embodiment, for which the sequence shifts are determined from RE indices of the time-frequency pattern and the OFDM symbol number. The sequence shift in OFDM symbol $n \in \{0,1,...,9\}$ is here selected as $m(n) = F(n) * (n + d)$, where $F(n)$ denotes a RE frequency position in OFDM symbol $n$. For example, for the time-frequency pattern shown in Figure 2, we use $F(n) = [0, 1, 8, 2, 4, 9, 7, 3, 6, 5]$, and for the time-frequency pattern shown in Figure 3 we use $F(n) = [3, 2, 1, 0, 5, 4, 3, 2, 1, 0]$. The first PRS could here use d=3, and the second PRS could use another value, e.g., *d=4.*

Further, the different steps of the method of the invention described above can be combined or performed in any suitable order. A condition for this, of course, is that the requirements of a step, to be used in conjunction with another step of the method of the invention, in terms of available parameters, must be fulfilled.

The method of the invention can be implemented by a computer program, having code means, which when run in a computer causes the computer to execute the steps of the method. The computer program is included in a computer readable medium of a computer program product. The computer readable medium may consist of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

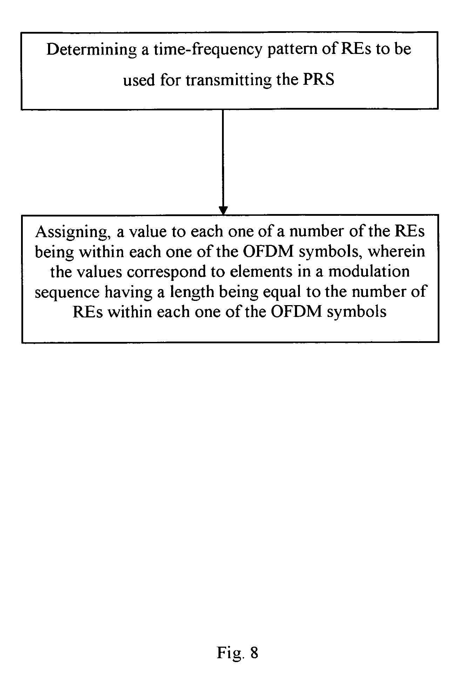

Figure 8 shows a general flow chart diagram for the method of the invention for generating a PRS according to the invention. I the first step, a time-frequency pattern of REs to be used for transmitting the PRS is determined, wherein that time-frequency pattern includes at least two OFDM symbols. In the second step of the method, for each one of the at least two OFDM symbols, respectively, a value to each one of a number of the REs of the time-frequency patter, which are within that OFDM symbol, is assigned. The assigned values correspond to elements in a modulation sequence having a length being equal to the number of REs within that OFDM symbol.

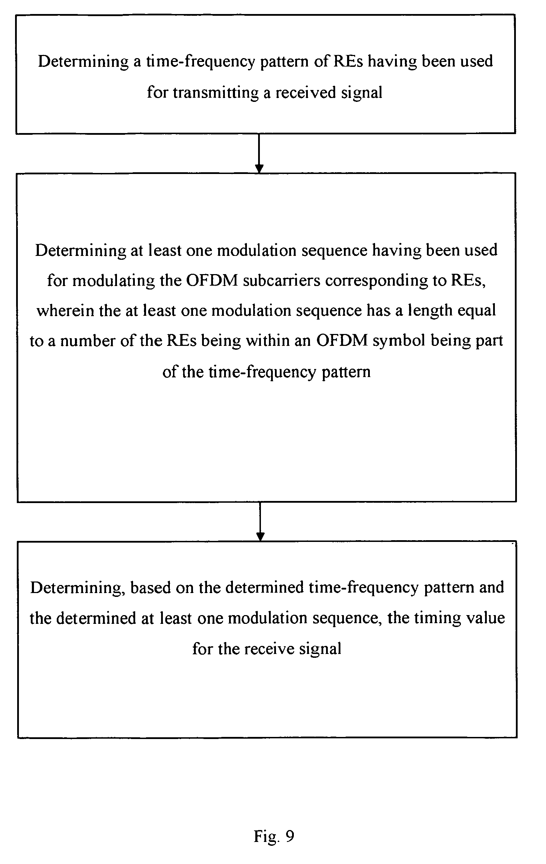

Figure 9 shows a general flow chart diagram for the method of the invention for detecting a timing value. In a first step of the method, a time-frequency pattern of REs having been used for transmitting a received signal is determined. In a second step of the method, at least one modulation sequence having been used for modulating the OFDM subcarriers corresponding to REs of the time-frequency pattern is determined. The length of the at least one modulation sequences is here equal to a number of the REs of the time-frequency pattern being within an OFDM symbol being part of said time-frequency pattern. In a third step of the method, the timing value is determined based on the determined time-frequency pattern and on the determined at least one modulation sequence.

Further, an entity arranged for generating a PRS according to the invention, or a transmitting node generating the PRS itself, comprises determination means being arranged for determining a time-frequency pattern of Resource Elements (REs) to be used for transmitting the PRS, wherein that time-frequency pattern includes at least two OFDM symbols. The entity or transmitting node further comprises assigning means being arranged for assigning, for each one of the at least two OFDM symbols, respectively, a value to each one of a number of the REs being within that OFDM symbol. The values thereby being assigned to the number of REs of the time-frequency pattern correspond to elements in a modulation sequence having a length being equal to the number of REs used for PRS within that symbol. The values are to be used for modulating OFDM subcarriers corresponding to the REs within that OFDM symbol.

A receiving node according to the invention, being arranged for detecting a timing value to be used for determining its position, comprises determining means being arranged for determining, while utilizing knowledge of a cell ID of each one of at least three cells, a time-frequency pattern of Resource Elements (REs) having been used for transmitting a received signal. The receiving node also comprises determination means being arranged for determining at least one modulation sequence having been used for modulating the OFDM subcarriers corresponding to the REs of the time-frequency pattern. The at least one modulation sequence here having a length being equal to a number of the REs being within an OFDM symbol being part of the time-frequency pattern. The receiving node also comprises determination means arranged for determining, based on the determined time-frequency pattern and the determined at least one modulation sequence, a timing value for the received signal in relation to signals from the other ones of the at least three cells.

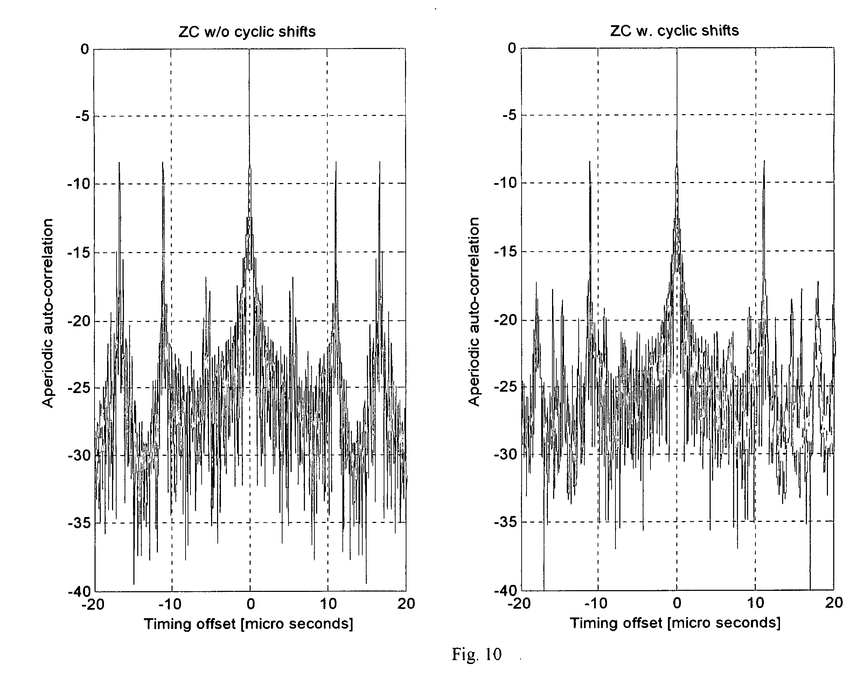

Figure 10 shows a simulation of the aperiodic auto-correlation function for the time-frequency pattern shown in figure 3 over a 20 MHz channel. To the left, the same Zadoff-Chu modulation sequence is used in all OFDM symbols, while the plot to the right uses modulation sequences being generated by different cyclic shifts of the base modulation sequence for each OFDM symbol. It can be seen in figure 10 that the use of different modulation sequences, being generated by using cyclic shifts, produce lower sidelobes of the auto-correlation.

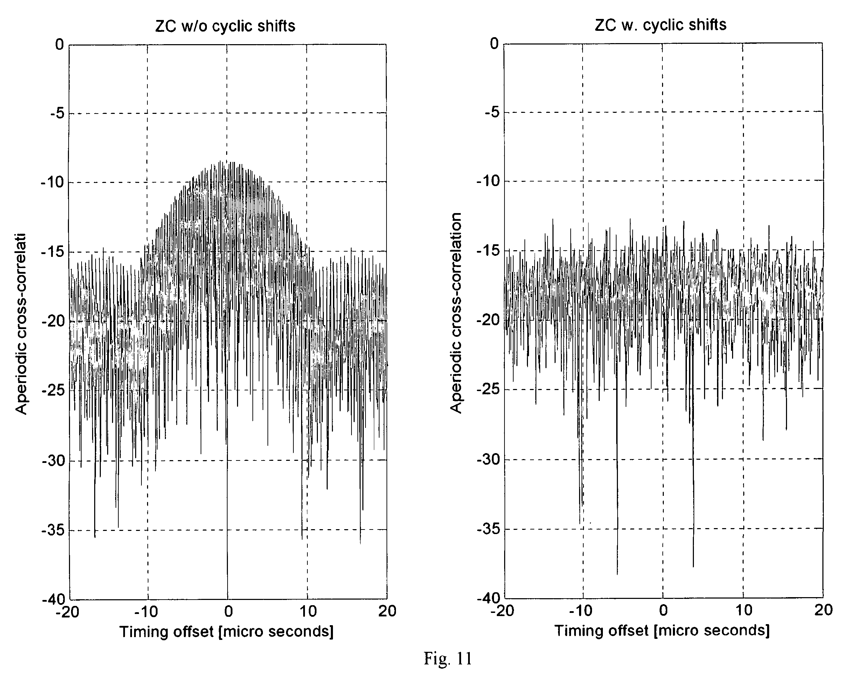

Fig. 11 shows a simulation of the aperiodic cross-correlation function for the same time-frequency pattern as simulated in figure 11. Also here, it can be seen that using different modulation sequences (the plot to the right) produce lower sidelobes also of the cross-correlation.

As is obvious for a skilled person, a number of other implementations, modifications, variations and/or additions can be made to the above described exemplary embodiments. It is to be understood that the invention includes all such other implementations, modifications, variations and/or additions which fall within the scope of the claims.

## Claims

1.  Method for generating a Positioning Reference Signal, PRS, to be used in a wireless Orthogonal Frequency Division Multiplexing, OFDM, communication system, **characterized in** the steps of:

    determining a time-frequency pattern of Resource Elements, REs, to be used for transmitting said PRS, wherein said time-frequency pattern includes at least two OFDM symbols, and
    assigning, for each one of said at least two OFDM symbols, respectively, a value to each one of a number of said REs being within that OFDM symbol, wherein
    the values being assigned to said number of REs correspond to elements in a modulation sequence having a length being equal to said number of REs, and are to be used for modulating OFDM subcarriers corresponding to said REs within that OFDM symbol.

2. Method as claimed in claim 1, wherein the modulation sequences being used for said at least two OFDM symbols has at least one of the characteristics in the group of:

at least one of said modulation sequences is the same as at least one second modulation sequence being used for at least one second PRS,
at least one of said modulation sequences is different from at least one second modulation sequence being used for at least one second PRS,
said modulation sequences are the same for said at least two OFDM symbols, and
said modulation sequences are different for each one of said at least two OFDM symbols.

3. Method as claimed in claim 1, wherein said time-frequency pattern has any of the characteristics in the group of:

said time-frequency pattern is the same as a second time-frequency pattern being used for at least one second PRS, and
said time-frequency pattern is different from a second time-frequency pattern being used for at least one second PRS.

4. Method as claimed in claim 1, wherein at least one of the modulation sequences being used for said at least two OFDM symbols is obtained while taking into consideration its influence on at least one of the parameters in the group of:

a Peak-to-Average Power Ratio PAPR,
an auto-correlation property, and
a cross-correlation property.

5. Method as claimed in claim 1, wherein at least one of the modulation sequences being used for said at least two OFDM symbols is obtained from at least one of the sequences in the group of:

a Zadoff-Chu sequence,
a Golay complementary sequence,
a Quadrature Phase Shift Keying, QPSK, sequence, and
an m-sequence.

6. Method as claimed in claim 1, wherein at least one of the modulation sequences being used for said at least two OFDM symbols is obtained by performing a manipulation of at least one base modulation sequence, thereby resulting in that modulation sequence.

7. Method as claimed in claim 6, wherein said manipulation involves at least one of the actions in the group of:

performing a phase modulation in a time domain on said base modulation sequence, and
performing a phase modulation in a frequency domain on said base modulation sequence.

8. Method as claimed in claim 6, wherein said manipulation involves at least one of the actions in the group of:

performing a cyclic shift in a frequency domain on said base modulation sequence, and
performing a cyclic shift in a time domain on said base modulation sequence.

9. Method as claimed in claim 6, wherein said manipulation includes performing a first and a second cyclic shift on a first and a second base modulation sequence of equal length, respectively, and concatenating said first and said second cyclically shifted base modulation sequences.

10. Method as claimed in claim 1, wherein said PRS is transmitted in at least one Resource Block, RB, belonging to a subset of a total number of RBs in the system.

11. Method of a transmitting node for transmitting a Positioning Reference Signal, PRS, in a wireless Orthogonal Fre-

**EP 2 409 464 B1**

quency Division Multiplexing, OFDM, communication system, **characterized in that** said PRS has been generated by the use of any one of the methods claimed in claims 1-10.

12. Method of a receiving node for detecting a timing value to be used for determining its position in a wireless Orthogonal Frequency Division Multiplex, OFDM, communication system, **characterized in that** said receiving node performs, by utilizing knowledge of a cell ID of each one of at least three cells, the steps of:

> determining a time-frequency pattern of Resource Elements, REs, having been used for transmitting a received signal,
> determining at least one modulation sequence having been used for modulating the OFDM subcarriers corresponding to REs of said time-frequency pattern, wherein said at least one modulation sequence has a length being equal to a number of said REs being within an OFDM symbol being part of said time-frequency pattern, and determining, based on said determined time-frequency pattern and said determined at least one modulation sequence, said timing value for said received signal in relation to signals from the other ones of said at least three cells.

13. Method as claimed in claim 12, wherein said receiving node further performs one of the steps in the group of:

> providing at least one value corresponding to an Observed Time Difference of Arrival, OTDOA, being based on the determined timing value, to a serving base station, and
> utilizing the determined timing value for determining its position.

14. Method as claimed in claim 12, wherein said receiving node, when determining at least one of the time-frequency pattern and the at least one modulation sequences, further utilizes knowledge of at least one of the data in the group of:

> a radio frame number,
> a PRS subframe number, and
> an OFDM symbol number.

15. Method as claimed in claim 12, wherein said receiving node determines at least one of a cyclic shift and a phase modulation, having been performed on at least one base modulation sequence when generating the at least one modulation sequences, by utilizing a position of at least one RE in said time-frequency pattern.

16. Computer program, **characterized in** code means, which when run in a computer causes the computer to execute the method according to any of the claims 1-15.

17. Computer program product including a computer readable medium and a computer program according to claim 16, wherein said computer program is included in the computer readable medium.

18. An entity arranged for generating a Positioning Reference Signal, PRS, to be used in a wireless Orthogonal Frequency Division Multiplexing, OFDM, communication system, **characterized by**: -

> determination means arranged for determining a time-frequency pattern of Resource Elements, REs, to be used for transmitting said PRS, wherein said time-frequency pattern includes at least two OFDM symbols,
> assigning means arranged for assigning, for each one of said at least two OFDM symbols, respectively, a value to each one of a number of said REs being within that OFDM symbol, wherein - the values being assigned to said number of REs correspond to elements in a modulation sequence having a length being equal to said number of REs, and are to be used for modulating OFDM subcarriers corresponding to the REs within that OFDM symbol.

19. The entity according to claim 18, wherein the entity is a transmitting node which is adapted to further transmit the Positioning Reference Signal, PRS.

20. Receiving node arranged for detecting a timing value to be used for determining its position in a wireless Orthogonal Frequency Division Multiplexing, OFDM, communication system, **characterized by**:

> determining means arranged for determining, while utilizing knowledge of a cell ID of each one of at least three cells, a time-frequency pattern of Resource Elements, REs, having been used for transmitting a received signal,

14

determination means arranged for determining, while utilizing said knowledge, at least one modulation sequence having been used for modulating the OFDM subcarriers corresponding to the REs of said time-frequency pattern, wherein said at least one modulation sequence has a length being equal to a number of said REs being within an OFDM symbol being part of said time-frequency pattern,

determination means arranged for determining, while utilizing said knowledge, based on said determined time-frequency pattern and said determined at least one modulation sequence, said timing value for said received signal in relation to signals from the other ones of said at least three cells.

**Patentansprüche**

1. Verfahren zum Erzeugen eines Positionsbestimmungsreferenzsignals PRS zur Verwendung in einem drahtlosen Orthogonal-Frequenzmultiplex- bzw. OFDM-Kommunikationssystem, **gekennzeichnet durch** die folgenden Schritte:

   Bestimmen eines Zeit-Frequenz-Musters von für die Übertragung des PRS zu verwendenden Ressourcenelementen RE, wobei das Zeit-Frequenz-Muster mindestens zwei OFDM-Symbole umfasst, und
   für jedes der mindestens zwei OFDM-Symbole jeweils Vergeben eines Werts an jedes einzelne einer Anzahl der RE, die sich in diesem OFDM-Symbol befinden, wobei
   die Werte, die an die Anzahl von RE vergeben werden, Elementen in einer Modulationssequenz mit einer Länge, die gleich der Anzahl der RE ist, entsprechen und zum Modulieren von OFDM-Subträgern, die den RE in diesem OFDM-Symbol entsprechen, zu verwenden sind.

2. Verfahren nach Anspruch 1, wobei die Modulationssequenzen, die für die mindestens zwei OFDM-Symbole verwendet werden, mindestens eine der Eigenschaften in der folgenden Gruppe aufweisen:

   mindestens eine der Modulationssequenzen ist dieselbe wie mindestens eine zweite Modulationssequenz, die für mindestens ein zweites PRS verwendet wird,
   mindestens eine der Modulationssequenzen ist von mindestens einer zweiten Modulationssequenz, die für mindestens ein zweites PRS verwendet wird, verschieden,
   die Modulationssequenzen sind für die mindestens zwei OFDM-Symbole dieselben und
   die Modulationssequenzen sind für jedes einzelne der mindestens zwei OFDM-Symbole verschieden.

3. Verfahren nach Anspruch 1, wobei das Zeit-Frequenz-Muster beliebige der Eigenschaften in der folgenden Gruppe aufweist:

   das Zeit-Frequenz-Muster ist dasselbe wie ein zweites Zeit-Frequenz-Muster, das für mindestens ein zweites PRS verwendet wird, und
   das Zeit-Frequenz-Muster ist von einem zweiten Zeit-Frequenz-Muster, das für mindestens ein zweites PRS verwendet wird, verschieden.

4. Verfahren nach Anspruch 1, wobei mindestens eine der Modulationssequenzen, die für die mindestens zwei OFDM-Symbole verwendet werden, erhalten wird, während ihr Einfluss auf mindestens einen der Parameter der folgenden Gruppe berücksichtigt wird:

   ein Verhältnis von Spitzen- zu Durchschnittsleistung PAPR,
   eine Autokorrelationseigenschaft, und
   eine Kreuzkorrelationseigenschaft.

5. Verfahren nach Anspruch 1, wobei mindestens eine der Modulationssequenzen, die für die mindestens zwei OFDM-Symbole verwendet werden, aus mindestens einer der Sequenzen in der folgenden Gruppe erhalten wird:

   eine Zadoff-Chu-Sequenz,
   eine Golay-Komplementärsequenz,
   eine Quadraturphasenumtastungs- bzw. QPSK-Sequenz und
   eine m-Sequenz.

6. Verfahren nach Anspruch 1, wobei mindestens eine der Modulationssequenzen, die für die mindestens zwei OFDM-Symbole verwendet werden, durch Ausführen einer Manipulation mindestens einer Basismodulationssequenz erhalten wird, um dadurch zu dieser Modulationssequenz zu führen.

7. Verfahren nach Anspruch 6, wobei die Manipulation mindestens eine der Aktionen in der folgenden Gruppe umfasst:

Ausführen einer Phasenmodulation in einem Zeitbereich an der Basismodulationssequenz und
Ausführen einer Phasenmodulation in einem Frequenzbereich an der Basismodulationssequenz.

8. Verfahren nach Anspruch 6, wobei die Manipulation mindestens eine der Aktionen in der folgenden Gruppe umfasst:

Ausführen einer zyklischen Verschiebung in einem Frequenzbereich an der Basismodulationssequenz und
Ausführen einer zyklischen Verschiebung in einem Zeitbereich an der Modulationssequenz.

9. Verfahren nach Anspruch 6, wobei die Manipulation Folgendes umfasst: Ausführen einer ersten und einer zweiten zyklischen Verschiebung an einer ersten bzw. einer zweiten Basismodulationssequenz gleicher Länge und Verketten der ersten und zweiten zyklisch verschobenen Basismodulationssequenz.

10. Verfahren nach Anspruch 1, wobei das PRS in mindestens einem Ressourcenblock RB übertragen wird, der zu einer Teilmenge einer Gesamtzahl von RB in dem System gehört.

11. Verfahren eines Übertragungsknotens zum Übertragen eines Positionsbestimmungsreferenzsignals PRS in einem drahtlosen Orthogonal-Frequenzmultiplex- bzw. OFDM-Kommunikationssystem, **dadurch gekennzeichnet, dass** das PRS durch Verwendung eines der Verfahren nach Anspruch 1-10 erzeugt wurde.

12. Verfahren eines Empfangsknotens zum Detektieren eines Timingwerts zur Verwendung zur Bestimmung seiner Position in einem drahtlosen Orthogonal-Frequenzmultiplex- bzw. OFDM-Kommunikationssystem, **dadurch gekennzeichnet, dass** der Empfangsknoten durch Benutzung von Kenntnis einer Zellen-ID jeder einzelnen von mindestens drei Zellen die folgenden Schritte ausführt:

Bestimmen eines Zeit-Frequenz-Musters von Ressourcenelementen RE, die zum Übertragen eines empfangenen Signals verwendet wurden,
Bestimmen mindestens einer Modulationssequenz, die zum Modulieren der OFDM-Subträger, die RE des Zeit-Frequenz-Musters entsprechen, verwendet wurde, wobei die mindestens eine Modulationssequenz eine Länge aufweist, die gleich einer Anzahl der RE ist, die sich in einem OFDM-Symbol befinden, das Teil des Zeit-Frequenz-Musters ist, und
Bestimmen des Timingwerts für das empfangene Signal in Bezug auf Signale von den anderen der mindestens drei Zellen auf der Basis des bestimmten Zeit-Frequenz-Musters und der bestimmten mindestens einen Modulationssequenz.

13. Verfahren nach Anspruch 12, wobei der Empfangsknoten ferner einen der Schritte in der folgenden Gruppe ausführt:

Bereitstellen mindestens eines Werts, der einer beobachteten Zeitdifferenz der Ankunft OTDOA entspricht, der auf dem bestimmten Timingwert basiert, für eine versorgende Basisstation und
Benutzen des bestimmten Timingwerts zum Bestimmen seiner Position.

14. Verfahren nach Anspruch 12, wobei der Empfangsknoten beim Bestimmen des Zeit-Frequenz-Musters und/oder der mindestens einen Modulationssequenz ferner Kenntnis mindestens einer der Daten in der folgenden Gruppe benutzt:

eine Funkrahmenzahl,
eine PRS-Subrahmenzahl und
eine OFDM-Symbolzahl.

15. Verfahren nach Anspruch 12, wobei der Empfangsknoten eine zyklische Verschiebung und/oder eine Phasenmodulation bestimmt, die beim Erzeugen der mindestens einen Modulationssequenz an mindestens einer Basismodulationssequenz ausgeführt wurden, indem eine Position mindestens eines RE in dem Zeit-Frequenz-Muster benutzt wird.

16. Computerprogramm, **gekennzeichnet durch** Codemittel, die, wenn sie in einem Computer ausgeführt werden, bewirken, dass der Computer das Verfahren nach einem der Ansprüche 1-15 ausführt.

17. Computerprogrammprodukt mit einem computerlesbaren Medium und einem Computerprogramm nach Anspruch 16, wobei das Computerprogramm in dem computerlesbaren Medium enthalten ist.

18. Entität, ausgelegt zum Erzeugen eines Positionsbestimmungsreferenzsignals PRS zur Verwendung in einem drahtlosen Orthogonal-Frequenzmultiplex- bzw. OFDM-Kommunikationssystem, **gekennzeichnet durch**:

   Bestimmungsmittel, ausgelegt zum Bestimmen eines Zeit-Frequenz-Musters von für die Übertragung des PRS zu verwendenden Ressourcenelementen RE, wobei das Zeit-Frequenz-Muster mindestens zwei OFDM-Symbole umfasst,
   Vergabemittel, ausgelegt zum Vergeben eines Werts für jedes einzelne der mindestens zwei OFDM-Symbole an jedes einzelne einer Anzahl der RE, die sich in diesem OFDM-Symbol befinden, wobei die Werte, die an die Anzahl von RE vergeben werden, Elementen in einer Modulationssequenz mit einer Länge, die gleich der Anzahl der RE ist, entsprechen und zum Modulieren von OFDM-Subträgern, die den RE in diesem OFDM-Symbol entsprechen, zu verwenden sind.

19. Entität nach Anspruch 18, wobei die Entität ein Übertragungsknoten ist, der dafür ausgelegt ist, ferner das Positionsbestimmungsreferenzsignal PRS zu übertragen.

20. Empfangsknoten, ausgelegt zum Detektieren eines Timingwerts zur Verwendung zum Bestimmen seiner Position in einem drahtlosen Orthogonal-Frequenzmultiplex- bzw. OFDM-Kommunikationssystem, **gekennzeichnet durch**:

   Bestimmungsmittel, ausgelegt zum Bestimmen eines Zeit-Frequenz-Musters von Ressourcenelementen RE, die zum Übertragen eines empfangenen Signals verwendet wurden, unter Benutzung von Kenntnis einer Zellen-ID jeder einzelnen der mindestens drei Zellen,
   Bestimmungsmittel, ausgelegt zum Bestimmen mindestens einer Modulationssequenz, die zum Modulieren der OFDM-Subträger verwendet wurde, die den RE des Zeit-Frequenz-Musters entsprechen, unter Benutzung der Kenntnis, wobei die mindestens eine Modulationssequenz eine Länge aufweist, die gleich einer Anzahl der RE ist, die sich in einem OFDM-Symbol befinden, das Teil des Zeit-Frequenz-Musters ist;
   Bestimmungsmittel, ausgelegt zum Bestimmen des Timingwerts für das empfangene Signal in Bezug auf Signale von den anderen der mindestens drei Zellen unter Benutzung der Kenntnis auf der Basis des bestimmten Zeit-Frequenz-Musters und der bestimmten mindestens einen Modulationssequenz.

**Revendications**

1. Procédé pour générer un signal de référence de positionnement, PRS (Positioning Reference Signal), à utiliser dans un système de communication à Multiplexage par Répartition Orthogonale de Fréquence, OFDM (Orthogonal Frequency Division Multiplexing), sans fil, **caractérisé par** les étapes consistant à :

   déterminer une configuration temps-fréquence d'éléments de ressources, RE (Resource Elements), à utiliser pour transmettre ledit PRS, dans lequel ladite configuration temps-fréquence comprend au moins deux symboles OFDM, et
   affecter respectivement, pour chacun desdits au moins deux symboles OFDM, une valeur à chacun d'un certain nombre desdits RE se situant au sein de ce symbole OFDM, dans lequel
   les valeurs qui sont affectées audit nombre de RE correspondent à des éléments dans une séquence de modulation ayant une longueur qui est égale audit nombre de RE, et qui doivent être utilisées pour moduler des sous-porteuses OFDM correspondant auxdits RE au sein de ce symbole OFDM.

2. Procédé selon la revendication 1, dans lequel les séquences de modulation qui sont utilisées pour lesdits au moins deux symboles OFDM ont au moins l'une des caractéristiques appartenant au groupe suivant :

   au moins l'une desdites séquences de modulation est identique à au moins une deuxième séquence de modulation qui est utilisée pour au moins un deuxième PRS,
   au moins l'une desdites séquences de modulation est différente d'au moins une deuxième séquence de modulation qui est utilisée pour au moins un deuxième PRS,

lesdites séquences de modulation sont identiques pour lesdits au moins deux symboles OFDM, et
lesdites séquences de modulation sont différentes pour chacun desdits au moins deux symboles OFDM.

3. Procédé selon la revendication 1, dans lequel ladite configuration temps-fréquence a l'une des caractéristiques appartenant au groupe suivant :

ladite configuration temps-fréquence est identique à une deuxième configuration temps-fréquence qui est utilisée pour au moins un deuxième PRS, et
ladite configuration temps-fréquence est différente d'une deuxième configuration temps-fréquence qui est utilisée pour au moins un deuxième PRS.

4. Procédé selon la revendication 1, dans lequel au moins l'une des séquences de modulation qui est utilisée pour lesdits au moins deux symboles OFDM est obtenue en tenant compte de son influence sur au moins l'un des paramètres appartenant au groupe suivant :

un rapport crête à puissance moyenne, PAPR (Peak-to-Average Power Ratio),
une propriété d'autocorrélation, et
une propriété d'intercorrélation.

5. Procédé selon la revendication 1, dans lequel au moins l'une des séquences de modulation qui est utilisée pour lesdits au moins deux symboles OFDM est obtenue à partir d'au moins l'une des séquences appartenant au groupe suivant :

une séquence de Zadoff-Chu,
une séquence complémentaire de Golay,
une séquence à Modulation par Déplacement de Phase en Quadrature, QPSK, et
une séquence m.

6. Procédé selon la revendication 1, dans lequel au moins l'une des séquences de modulation qui est utilisée pour lesdits au moins deux symboles OFDM est obtenue en effectuant une manipulation d'au moins une séquence de modulation de base, cela conduisant à cette séquence de modulation.

7. Procédé selon la revendication 6, dans lequel ladite manipulation comprend au moins l'une des actions appartenant au groupe suivant :

effectuer une modulation de phase dans un domaine temporel sur ladite séquence de modulation de base, et
effectuer une modulation de phase dans un domaine de fréquence sur ladite séquence de modulation de base.

8. Procédé selon la revendication 6, dans lequel ladite manipulation comprend au moins l'une des actions appartenant au groupe suivant :

effectuer un décalage cyclique dans un domaine de fréquence sur ladite séquence de modulation de base, et
effectuer un décalage cyclique dans un domaine temporel sur ladite séquence de modulation de base.

9. Procédé selon la revendication 6, dans lequel ladite manipulation comprend l'exécution d'un premier et d'un second décalage cyclique sur des première et deuxième séquences de modulation de base de longueurs égales, respectivement, et la concaténation desdites première et deuxième séquences de modulation de base décalées cycliquement.

10. Procédé selon la revendication 1, dans lequel ledit PRS est transmis dans au moins un bloc de ressources, RB (Resource Block), appartenant à un sous-ensemble d'un nombre total de RB dans le système.

11. Procédé d'un noeud de transmission destiné à transmettre un signal de référence de positionnement, PRS, dans un système de communication à Multiplexage par Répartition Orthogonale de Fréquence, OFDM, sans fil, **caractérisé en ce que** ledit PRS a été généré par utilisation de l'un quelconque des procédés revendiqués dans les revendications 1 à 10.

12. Procédé d'un noeud de réception destiné à détecter une valeur de cadencement à utiliser pour déterminer sa position dans un système de communication à Multiplexage par Répartition Orthogonale de Fréquence, OFDM, sans fil **caractérisé en ce que** ledit noeud de réception effectue, en utilisant la connaissance d'un ID de cellule de chacune d'au moins trois cellules, les étapes consistant à :

déterminer une configuration temps-fréquence d'éléments de ressources, RE, ayant été utilisés pour transmettre un signal reçu,

déterminer au moins une séquence de modulation ayant été utilisée pour moduler les sous-porteuses OFDM correspondant à des RE de ladite configuration temps-fréquence, dans lequel ladite au moins une séquence de modulation a une longueur qui est égale à un nombre desdits RE qui se situent au sein d'un symbole OFDM faisant partie de ladite configuration temps-fréquence, et

déterminer, sur la base de ladite configuration temps-fréquence déterminée et de ladite au moins une séquence de modulation déterminée, ladite valeur de cadencement pour ledit signal reçu par rapport à des signaux provenant des autres desdites au moins trois cellules.

13. Procédé selon la revendication 12, dans lequel ledit noeud de réception effectue en outre l'une des étapes appartenant au groupe suivant :

fournir au moins une valeur correspondant à une différence de temps d'arrivée observée, OTDOA (Observed Time Difference Of Arrival), qui est basée sur la valeur de cadencement déterminée, à une station de base de desserte, et

utiliser la valeur de cadencement déterminée pour déterminer sa position.

14. Procédé selon la revendication 12, dans lequel ledit noeud de réception, lors de la détermination d'au moins l'une des configurations temps-fréquence et de l'au moins une séquence de modulation, utilise en outre la connaissance d'au moins l'une des données appartenant au groupe suivant :

un nombre de trames radio,
un nombre de sous-trame PRS, et
un nombre de symboles OFDM.

15. Procédé selon la revendication 12, dans lequel ledit noeud de réception détermine au moins l'un d'un décalage cyclique et d'une modulation de phase, ayant été effectué sur au moins une séquence de modulation de base lors de la génération de l'au moins une séquence de modulation, en utilisant une position d'au moins un RE dans ladite configuration temps-fréquence.

16. Programme d'ordinateur, **caractérisé par** des moyens de code qui, lorsqu'il sont exécutés sur un ordinateur amènent l'ordinateur à exécuter le procédé selon l'une quelconque des revendications 1 à 15.

17. Produit de programme d'ordinateur comprenant un support lisible par ordinateur et un programme d'ordinateur selon la revendication 16, dans lequel ledit programme d'ordinateur est inclus dans le support lisible par ordinateur.

18. Entité conçue pour générer un signal de référence de positionnement, PRS, à utiliser dans un système de communication à Multiplexage par Répartition Orthogonale de Fréquence, OFDM, sans fil, **caractérisé par** :

un moyen de détermination conçu pour déterminer une configuration temps-fréquence d'éléments de ressources, RE, à utiliser pour transmettre ledit PRS, dans lequel ladite configuration temps-fréquence comprend au moins deux symboles OFDM,

un moyen d'affectation conçu pour affecter respectivement, pour chacun desdits au moins deux symboles OFDM, une valeur à chacun d'un certain nombre desdits RE se situant au sein de ce symbole OFDM, dans lequel les valeurs qui sont affectées audit nombre de RE correspondent à des éléments dans une séquence de modulation ayant une longueur qui est égale audit nombre de RE, et qui doivent être utilisées pour moduler des sous-porteuses OFDM correspondant aux RE au sein de ce symbole OFDM.

19. Entité selon la revendication 18, dans laquelle l'entité est un noeud de transmission qui est conçu pour transmettre en outre le signal de positionnement de référence, PRS.

20. Noeud de réception conçu pour détecter une valeur de cadencement à utiliser pour déterminer sa position dans un système de communication à Multiplexage par Répartition Orthogonale de Fréquence, OFDM, sans fil, **caractérisé**

**par** :

un moyen de détermination conçu pour déterminer, en utilisant la connaissance d'un ID de cellule de chacune d'au moins trois cellules, une configuration temps-fréquence d'Eléments de Ressources, RE, ayant été utilisés pour transmettre un signal reçu,

un moyen de détermination conçu pour déterminer, en utilisant ladite connaissance, au moins une séquence de modulation ayant été utilisée pour moduler les sous-porteuses OFDM correspondant aux RE de ladite configuration temps-fréquence, dans lequel ladite au moins une séquence de modulation a une longueur qui est égale à un nombre desdits RE se situant au sein d'un symbole OFDM faisant partie de ladite configuration temps-fréquence,

un moyen de détermination conçu pour déterminer, en utilisant ladite connaissance, sur la base de ladite configuration temps-fréquence déterminée et de ladite au moins une séquence de modulation déterminée, ladite valeur de cadencement pour ledit signal reçu par rapport à des signaux provenant des autres desdites au moins trois cellules.

Cell Specific RS

PRS

Control Channel

No Transmission

No PRS in row

No PRS in column

Fig. 1

    Cell Specific RS

    PRS

    Control Channel

    No Transmission

Fig. 2

Cell Specific RS

PRS

Control Channel

No Transmission

Fig. 3

Fig. 4

Fig. 5

Fig. 6

| | | | | | | | | | |
|---|---|---|---|---|---|---|---|---|---|
| | | | | | | | $Z_0[9]$ | | |
| | | | $Z_0[5]$ | | | | | | |
| | $Z_0[3]$ | | | | | | | | |
| $Z_0[2]$ | | | | | | | | | |
| | | | | $Z_0[6]$ | | | | | |
| | | $Z_0[3]$ | | | | | | | |
| | | | | | $Z_0[7]$ | | | | |
| | | | | | | | $Z_0[9]$ | | |
| | | | | | | | | $Z_0[1$ | |
| | | | $Z_0[5]$ | | | | | | |
| | | | | | | $Z_0[8]$ | | | |
| | | $Z_0[4]$ | | | | | | | |
| | $Z_0[2]$ | | | | | | | | |
| $Z_0[1]$ | | | | | | | | | |
| | | | | $Z_0[5]$ | | | | | |
| | | $Z_0[2]$ | | | | | | | |
| | | | | | $Z_0[6]$ | | | | |
| | | | | | | | $Z_0[8]$ | | |
| | | | | | | | | $Z_0[9]$ | |
| | | | $Z_0[4]$ | | | | | | |
| | | | | | | $Z_0[7]$ | | | |
| | | $Z_0[3]$ | | | | | | | |
| | $Z_0[1]$ | | | | | | | | |
| $Z_0[0]$ | | | | | | | | | |

Fig. 7

Determining a time-frequency pattern of REs to be used for transmitting the PRS

Assigning, a value to each one of a number of the REs being within each one of the OFDM symbols, wherein the values correspond to elements in a modulation sequence having a length being equal to the number of REs within each one of the OFDM symbols

Fig. 8

Determining a time-frequency pattern of REs having been used for transmitting a received signal

Determining at least one modulation sequence having been used for modulating the OFDM subcarriers corresponding to REs, wherein the at least one modulation sequence has a length equal to a number of the REs being within an OFDM symbol being part of the time-frequency pattern

Determining, based on the determined time-frequency pattern and the determined at least one modulation sequence, the timing value for the receive signal

Fig. 9

ZC w. cyclic shifts

Aperiodic auto-correlation

Timing offset [micro seconds]

Fig. 10

ZC w/o cyclic shifts

Aperiodic auto-correlation

Timing offset [micro seconds]

Fig. 11

EP 2 409 464 B1